# EUROPEAN PATENT APPLICATION

(11) **EP 2 853 373 A1**
(43) Date of publication of application: **01.04.2015**
(21) Application number: 14184914.1
(22) Date of filing: 16.09.2014
(51) Int. Cl.: B29C 45/40, B29C 33/26, B22D 17/26, B22D 17/22, B29C 33/44, B29C 45/26

(54) **Device in a moulding tool**

(30) Priority: 25.09.2013 SE 1351105
(71) Applicant: Müller Mekaniska AB, 504 64 Boras (SE)
(72) Inventor: Müller, Hans, 506 70 Frufällan (SE)
(74) Representative: Cederbom, Hans Erik August

(57) **Abstract**

The invention concerns a device (1) in a moulding tool (2) for plastic or metal materials for the mounting on the outside (3) of the tool consisting of movable locking part (5) receivable in recess (6).

According to the invention, the locking part (5) and the recess (6) for the same are journalled to be pivotable in relation to each other.

(Fig. 1A)

## Description

The present invention concerns a device in a moulding tool for plastic or metal materials for the mounting on the outside of the mould of the tool and consisting of pivotably mounted locking part receivable in recess.

Known solutions for the mounting of two-stage ejectors and hookdraws, respectively, in connection with moulding tools for plastic or metal materials in molten state usually comprise solutions built-in internally in the moulding tool, which occupy large space and which in addition are difficult to see and maintain, for instance to lubricate or replace parts in, if required. Wearing surfaces of known solutions are in addition small, which entails quick wear-out and that check of the parts is required at regular intervals. The same parts cannot, with known solutions, be utilized for different purposes, such as for two-stage ejectors and hookdraws, respectively. In addition, components of known devices project underneath the tool, which makes more difficult handling and storage of the tool.
D1: FR 2337618 A,
D2: JP 2000202882 A,
D3: US 3004291 A
D4: GB 1329550 A and
D5: JPS 5171354 A
disclose devices comprising pivotable hooks.

However, no one discloses a pivotably mounted arm having a locking part carried thereon and which is arranged to interact with a connection and the inside thereof, and which connection extends between the fixed end halves of the mould tool. Neither there is disclosed such a locking device that is utilized as hookdraw in a moulding tool for plastic or metal materials therein.

Therefore, the main object of the present invention is primarily to solve, among other things, some of said disadvantages using simple and efficient working means.

Said object is achieved by means of a device according to the present invention, which essentially is characterized in that the locking part, which is formed of a pivotably mounted arm, which is provided with an angled and/or thickened end part of the arm fitting in said recess, is arranged on the inside of a connection between the fixed end halves of the mould tool.

The invention also concerns a device applicable as hookdraw, the features of which are seen in claim 6.

In the following, the invention is described in the form of a number of preferred embodiment examples in the application of two-stage ejectors as well as hookdraws, reference being made to the accompanying drawings, in which
Figs. 1-3 show a first embodiment example of the device for two-stage ejection, wherein
Fig. 1 shows a part of a moulding tool for plastic or metal materials and an appurtenant device in disengaged state,
Fig. 1A shows the device in locked state,
Fig. 2 shows a side view of the device, and
Fig. 3 shows a section view along the line III-III in Fig. 2,
Fig. 3A shows alternatives of attachment,
Figs. 4-6 show a second embodiment example of the device in two-stage ejection, wherein

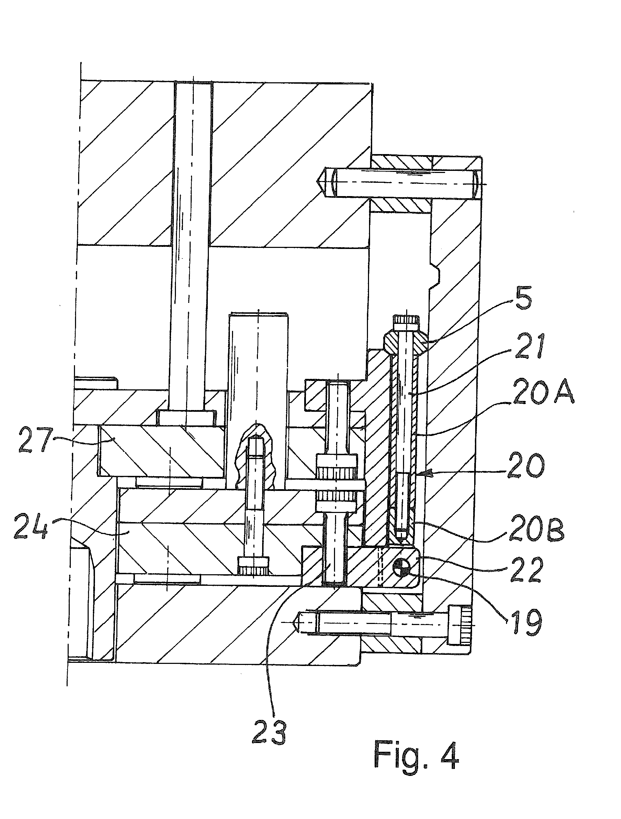

Fig. 4 shows a part of a moulding tool and in partly section view the appurtenant device in disengaged state,

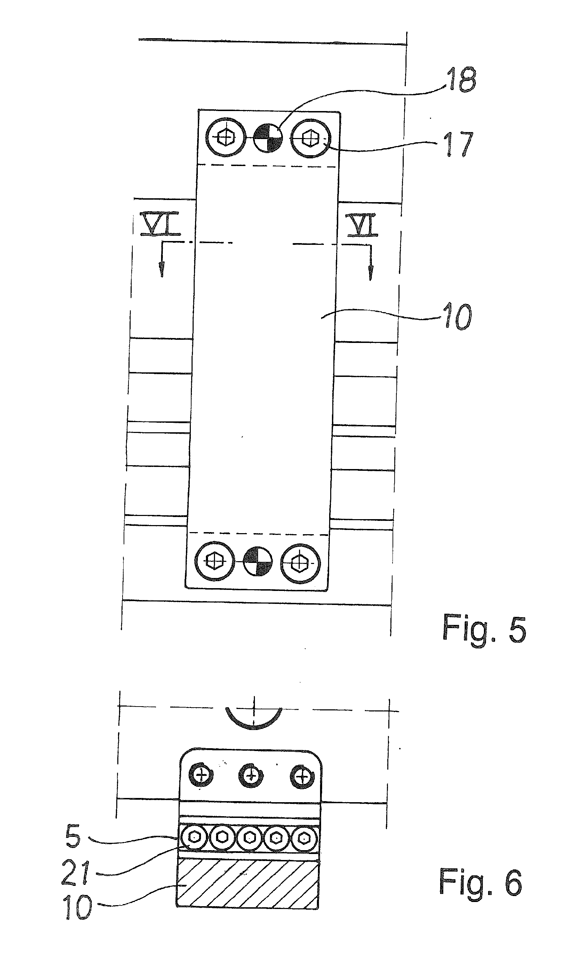

Fig. 5 shows a side view of the device, and
Fig. 6 shows a section view along the line VI-VI in Fig. 5,

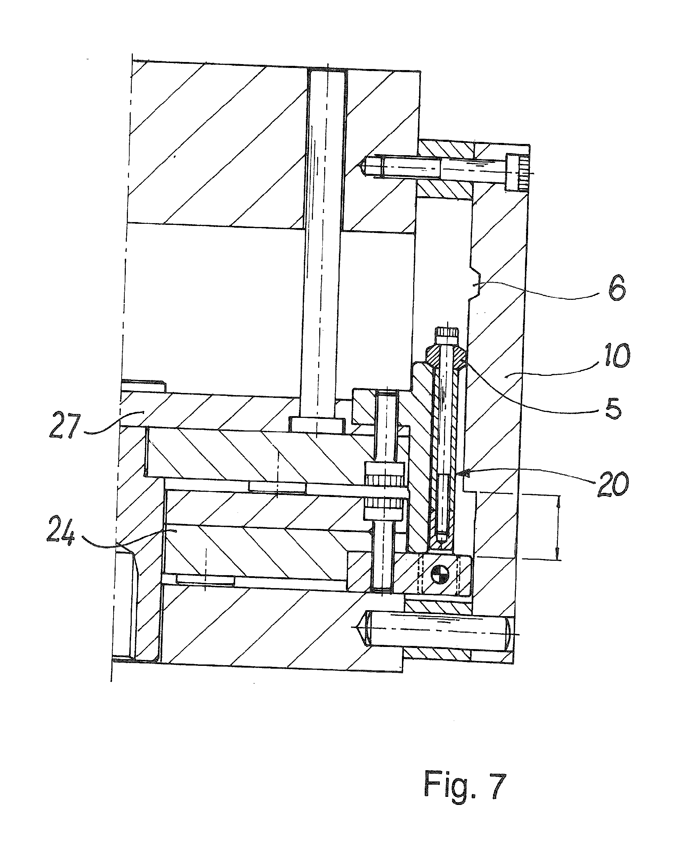

Figs. 7-8 show a third embodiment example of the device in two-stage ejection, wherein
Fig. 7 shows a part of a moulding tool and device in disengaged state, and

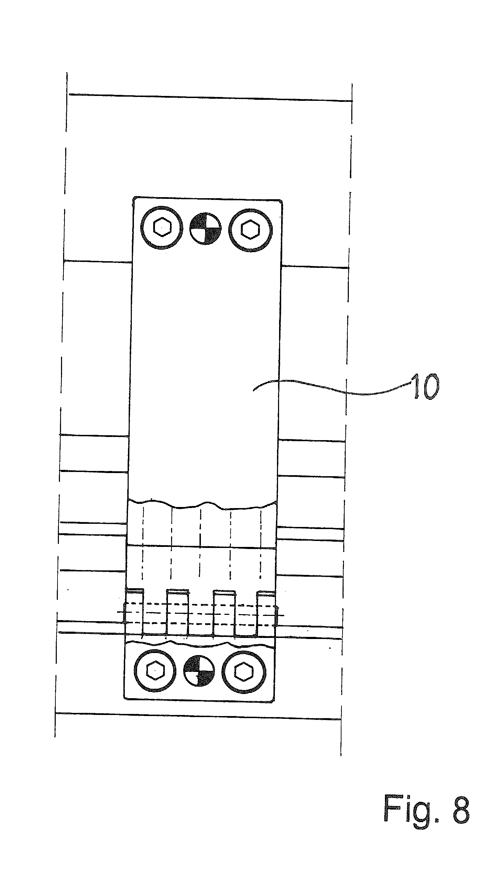

Fig. 8 shows a side view of the device,

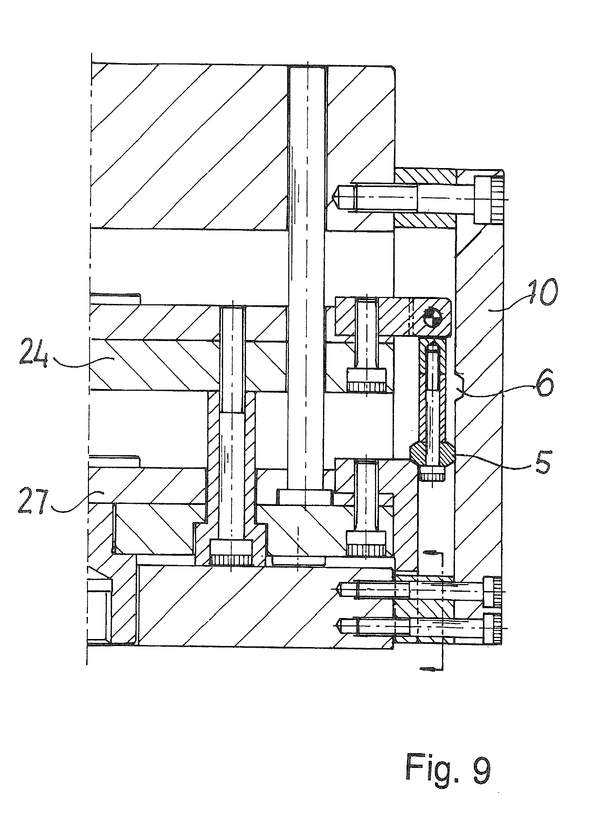

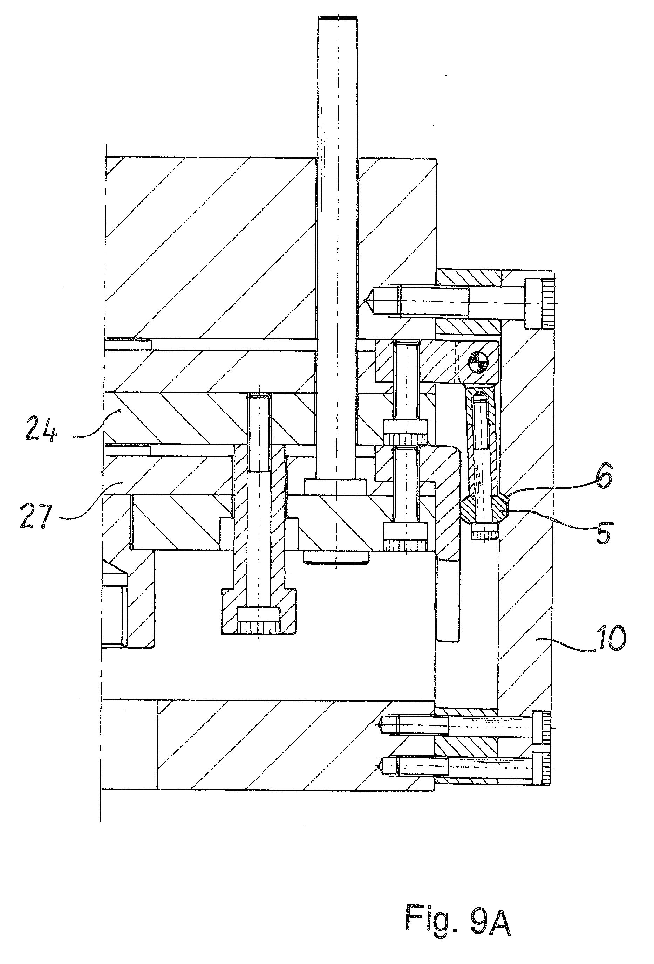

Figs. 9-10 show a fourth embodiment example of the device in two-stage ejection, wherein
Fig. 9 shows a part of a moulding tool and the appurtenant device in disengaged state,
Fig. 9A shows the device in locked state,

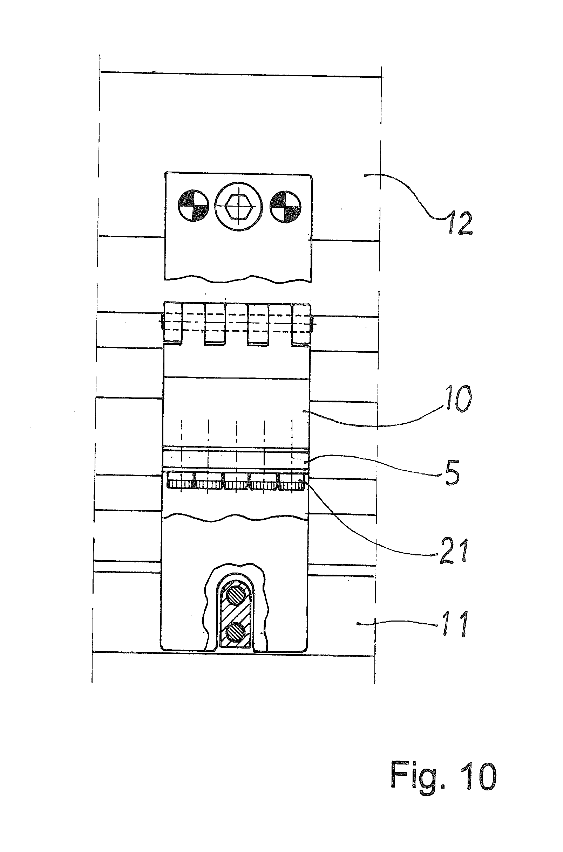

Fig. 10 shows a side view of the device, and

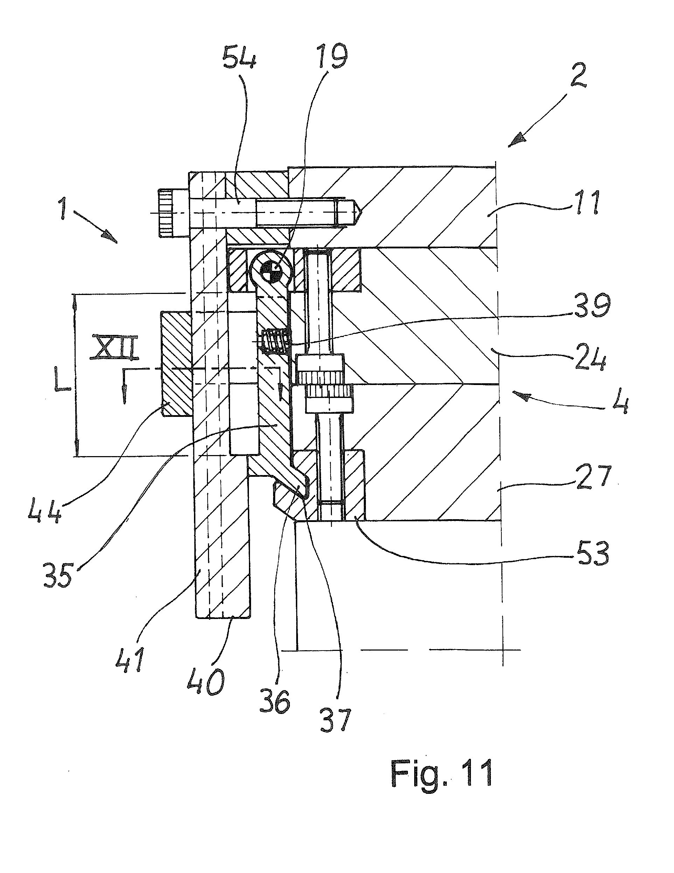

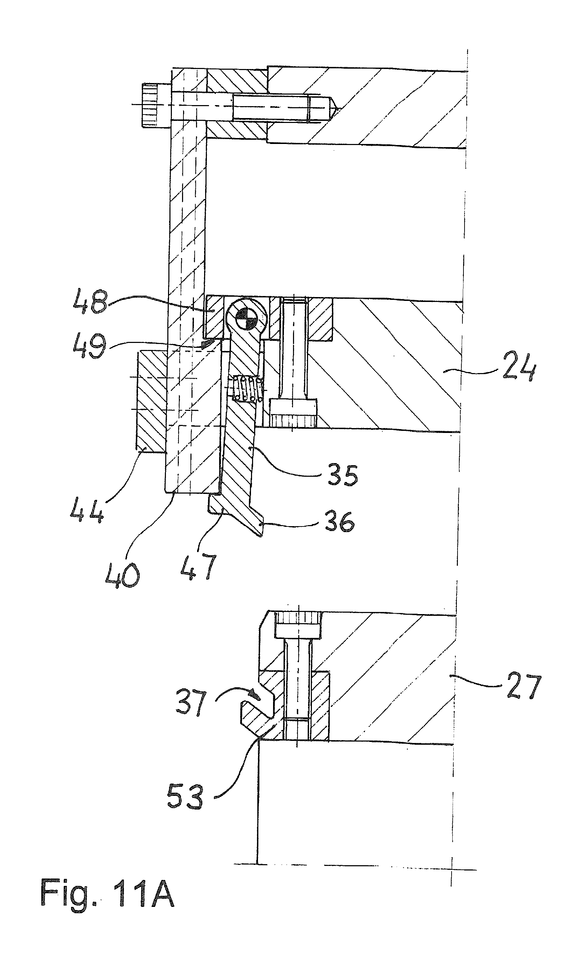

Figs. 11-13 show an embodiment example of a hookdraw with a device therefor, wherein
Fig. 11 shows the device in disengaged state,
Fig. 11A shows the device in locked state,

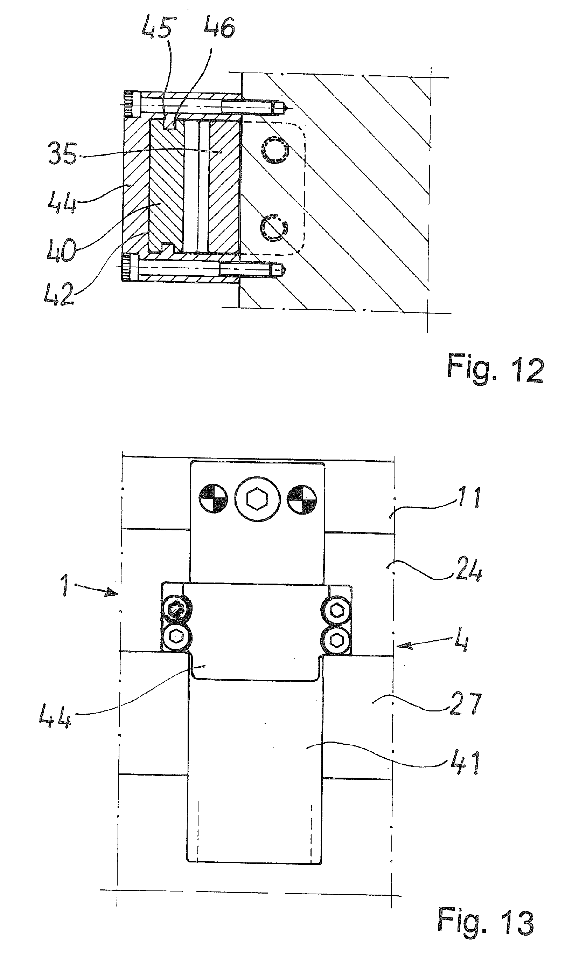

Fig. 12 shows a section view along the line XII-XII in Fig. 11, and
Fig. 13 shows a side view of the device.

The device according to the present invention allows obtaining a number of advantages, *viz.,* among others:
* That the device is not bulky situated inside the proper mould of the moulding tool.
* That the device has a visible operating cycle and that it accordingly is easy to service and maintain, for instance to lubricate.
* That the device has at least twice as long wearing surfaces in comparison with known solutions, e.g., the round ones intended for installation in the mould and which presently are available on the market.
* Several of the included components which now are utilized may be equally formed irrespective of whether they are used for two-stage ejectors or hookdraws.
* The parts of the device are situated within the frame of the circumference of the tool and do accordingly not project on the underside from the tool, as in known solutions, so that they block the handling, the transportation, and the storage of the tool in question.

The invention is intended to be possible to manufacture in both continuous and trailing embodiment of the moulding tool and with or without integrated stop for the first stroke. The device is furthermore intended to be mounted at least one on each side of the tool mould.

A device 1, which is intended and arranged to be applied in a moulding tool 2 for plastic or metal materials to be mounted on the outside 3 of the mould 4 of the tool, and which consists of a movable locking part 5, which is receivable in a recess 6 therefor, is of such a nature that the locking part 5 and the recess 6 for the same are journalled to be pivotable in relation to each other. In the embodiment shown and which is shown as examples in the accompanying drawings, the locking part 5 is journalled to be pivotable and is supported by a pivotable clapper 7 or another motion part. The device 1 in question is arranged to work as a two-stage ejector for continuous as well as trailing embodiment. That is, the tool mould package presses the upper/front surface of a machine, and, respectively, that the lower/rear tool mould package is connected so that it can be pulled back by means of the device 1. The device is either provided with or lacks integrated stop 8 for the first stroke of said moulding tool 2. Said locking part 5 is formed of a pivotable journalled arm, which is provided with angled and/or thickening end part of the arm fitting in said recess and which recess 6 is arranged preferably in the form of a transverse chute on the inside 9 of a fastened connection 10 between the fixed end halves 11, 12 of the mould tool. In said recess 6, the preferably strip-shaped locking part 5 is receivable with a portion 5A.

The connection 10 is formed of a girder or sheet with the recess 6 or another formed groove or receiving part arranged laterally on the portion of the girder that faces the interior of the mould and that the ends 13, 14 of the girder are connected with the fixed end halves 11, 12 of the moulding tool by means of bolts 17 and guide pins 18.

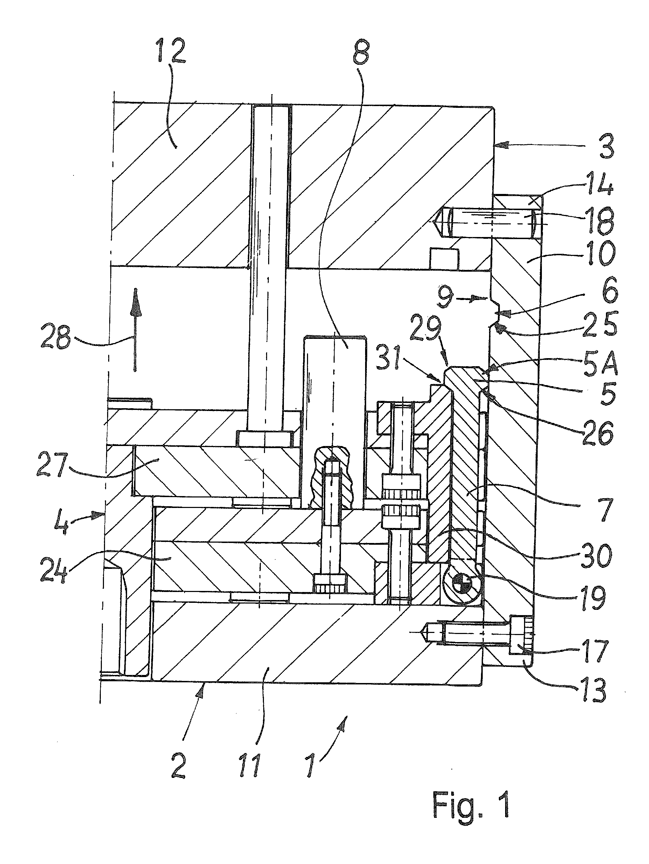

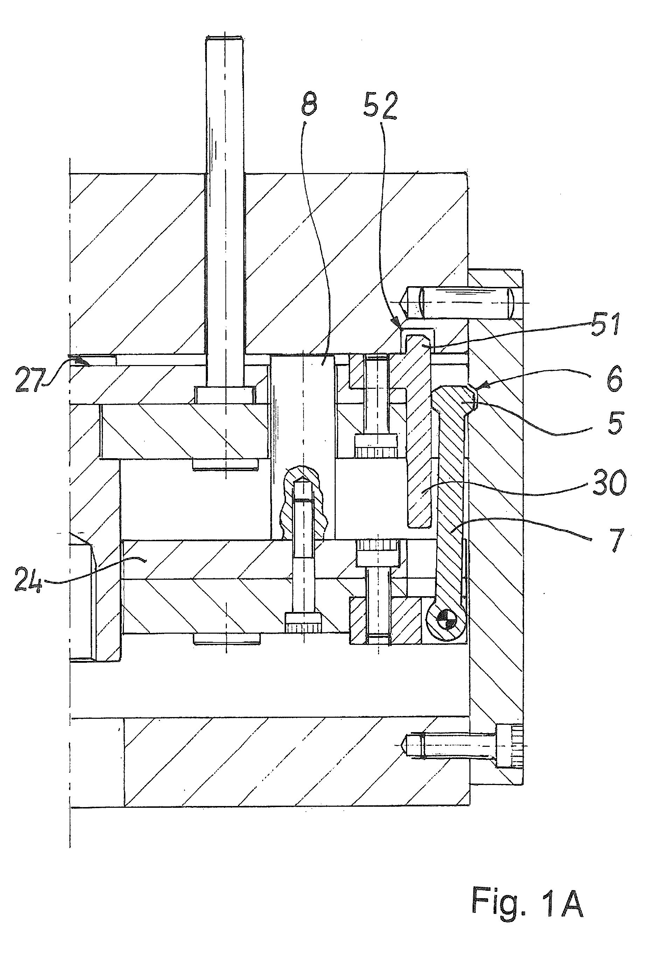

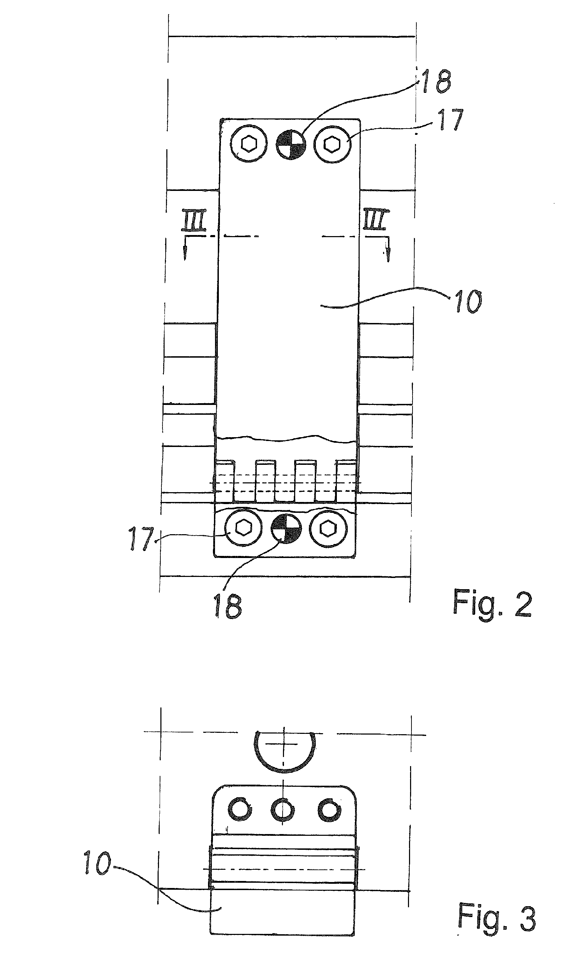

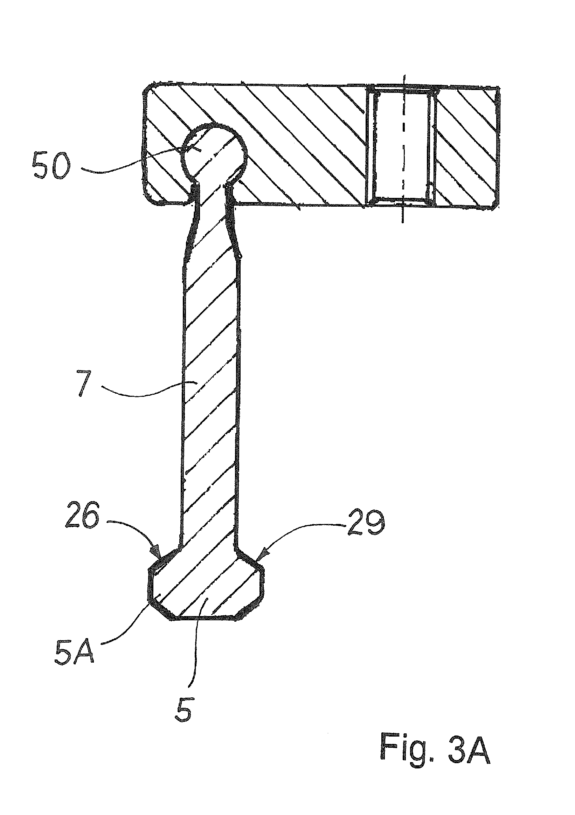

In Fig. 1, the locking part 5 is shown made integrated with supporting pivotable clapper 7 or another design of said arm. Thus, this unit, which is journalled to be pivotable on a pivot shaft 19, is made with a fixed length, and, for instance, the clapper 7 may alternatively be journalled by a ball-and-socket joint 50, as is shown in Fig. 3A.

In Figs. 4-10, embodiment examples are shown where an appurtenant supporting part 20 for the locking part 5 varies in length. In the cases shown, said part is formed of two portions 20A, 20B at least one of which may be replaced by one having a fitting length so that the length of stroke becomes the correct one. In that connection, the holding together of the strip-shaped locking part 5 with said support part portions 20A, 20B is provided by bolts 21 and with the inner support part portion 20B being pivotably mounted via a pivot shaft 19 in a transverse part 22 which, via bolts 23, is attached to a mould half 24.

Said recess 6 and end part 5A of the movable locking part 5 are shape-adapted to each other and have leaning co-operating sliding surfaces 25, 26, which co-operate with each other when the mould halves 24; 27 are displaced in the tool 2 in the direction of the arrow 28. The locking part 5, which is journalled to be pivotable, has a wedge-shaped actuation surface 29, which is turned directed inward toward the interior of the mould and an actuation part 30 connected with a mould half 27 has a pressure surface 31, which is arranged to be co-operatable with said actuation surface 29 of the locking part 5.

In a device 1, which is shown in Figs. 11-13, and wherein the device 1 is arranged to work as a hookdraw, i.e., it brings along a plate before the mould 4 opens, the locking part is formed of a pivotably mounted hook-shaped arm 35, which has a leaning upright 36, which projects from the arm inward toward the interior of the mould and is receivable in a shape-adapted recess 37 of a mould half 27 in a reception part 53 attached thereto, and the function of said projecting upright 36 will be explained later.

Said hook-shaped arm 35 is journalled to, with a hook part 47, be pivotable on a shaft 19 to be turned into engagement around an end part 40 of an arm 41, which is attached to a plate 11 externally on the moulding tool 2. Pivoting actuation of said arm 35 is provided by said leaning upright 36 receivable in the recess 37 and projecting from the arm 35. The length L of said hook-shaped pivotable and spring force-actuatable lock arm 35 determines the length of stroke of the movable plates of the tool. The lock arm 35 is guided in a recess 42 inside a bolted outer part 44, and between the fixed arm 41 and the outer part 44, tongue and groove 45, 46 are arranged. A spring 39, which is received in a recess 37 in said arm 35, is arranged to, by its spring force, keep the swinging arm 35 in place in locked state, as is shown in Fig. 11A.

The nature of the invention has been described above and has been clearly shown in the drawings.

The function of the invention should also be appreciated with the aid of the drawings and the explanatory text about the nature. However, actuation of the tool 2 entails that the mould halves 24, 27 are displaced together, the movable locking part 5 being turned in with the shape-adapted portion thereof in the appurtenant fitting recess 6, after pressing with the front the pressure surface 31 of the actuation part 30 against the movable locking part 5 and the wedge-shaped actuation surface 29 thereof. Next, the rear mould half 24 is retained in fixed position, and the front mould half 27 is then free to alone be displaced in the direction 28 from the rear mould half 24 until stop shoulders 51 situated in the front reaches the end half 12 and fitting recess 52 therein. See Fig. 1A. Then, the movement of the mould halves 24, 27 in the direction of motion 28 is finished.

The function of the device 1, which is shown in Figs. 4-10, is similar.

The function of the hookdraw shown in Fig. 11 is according to the following:

The mould plates 24, 27 are brought along when the mould 4 opens. When the lock arm 35 has passed the end part 40 of the arm 41, said lock arm can be pressed out by the projecting leaning upright 36, so that a hook-shaped part 47 of the lock arm 35 assumes a position behind said arm end part 40, as is shown in Fig. 11A. Simultaneously, a stopper 48 comes to stop with a shelf 49 of said arm 41 and stops the continued projection of the mould half 24. After that, the front mould half 27 is free to continue its projecting movement as shown in Fig. 11A after the upright 36 of the lock arm 35 has left the hold of the leaning recess 37 in a bolted edge part 53 of the mould half 27 and which edge part 53 forms a reception part for the upright 36 in a recess 37 therefor. At opposite movement, the lock arm 35 is interconnected with the mould half 27 according to the above. The length of stroke L is determined by the position at which the arm 41 is bolted on one end half 11 of the mould using fitting screw joints 54.

The invention is not limited to the above-mentioned concerning the different embodiments but it may be freely varied within the scope of the claims in question. It should be appreciated that above only one device is shown on a part of a moulding tool but naturally several similar devices are arranged distributed along the circumference of said tool. For instance, in pairs along each side.

## Claims

1. Device (1) in a moulding tool (2) for plastic or metal materials for the mounting on the outside (3) of the mould (4) of the tool and consisting of pivotably mounted locking part (5) receivable in recess (6), **characterized in that** the locking part (5), which is formed of a pivotably mounted arm (7), which is provided with angled and/or thickened end part of the arm (7) fitting in said recess (6), is arranged on the inside (9) of a connection (10) between the fixed end halves (11, 12) of the mould tool.

2. Device (1) according to claim 1, the device (1) being arranged to work as a two-stage ejector for continuous as well as trailing embodiment and provided with or without integrated stop (8) for the first stroke of said moulding tool, **characterized in that** the recess (6) is in the form of a chute, that the connection (10) is formed of a girder with the recess (6) arranged laterally on the portion of the girder facing the interior of the mould, and that the ends (13, 14) of the girder are connected with the fixed end halves (15, 16) of the moulding tool by means of bolts (17) and guide pins (18).

3. Device according to any one of the above claims, **characterized in that** a supporting part (20) for the locking part (5) is length-variable (20A, 20B).

4. Device according to any one of claims 1-3, **characterized in that** the recess (6) and the lock end part (5A) are shape-adapted to each other and have leaning co-operating sliding surfaces (25, 26).

5. Device (1) according to claim 4, **characterized in that** the locking part (5), which is journalled to be pivotable, has a wedge-shaped actuation surface (29) facing inward toward the interior of the mould, and that an actuation part (30) connected with a mould half (27) has a pressure surface (31) co-operatable with said actuation surface (29).

6. Device (1) in a moulding tool (2) for plastic or metal materials for the mounting on the outside of the mould (4) of the tool and consisting of movable locking part (36) receivable in recess (37) and that the locking part (36) and the recess (37) for the same are journalled to be pivotable in relation to each other, the device being arranged to work as a hookdraw, i.e., that it brings along a plate when the mould opens, **characterized in that** the locking part is formed of a pivotably mounted hook-shaped arm (35) having an leaning upright (36), which projects inward toward the interior of the mould and is receivable in a shape-adapted recess (37) in a mould half.

7. Device according to claim 6, **characterized in that** said hook-shaped arm (35) is actuated by said projecting leaning upright (36), to be turned into engagement with an end part (40) on an arm (41), which is received externally on the moulding tool (2) and attached to a plate (11), as well as that a spring (39) is arranged to act in a recess in said hook-shaped arm (35) and against one mould half (24) to keep said arm (5) in place in a locked state.
